(19) Europäisches Patentamt
European Patent Office
Office européen des brevets

(11) **EP 1 449 339 B1**

(12) **FASCICULE DE BREVET EUROPEEN**

(45) Date de publication et mention
de la délivrance du brevet:
**13.10.2010 Bulletin 2010/41**

(51) Int Cl.:
***H04L 27/26*** (2006.01)     ***H04L 27/38*** (2006.01)

(21) Numéro de dépôt: **02796875.9**

(22) Date de dépôt: **26.11.2002**

(86) Numéro de dépôt international:
**PCT/FR2002/004049**

(87) Numéro de publication internationale:
**WO 2003/047196 (05.06.2003 Gazette 2003/23)**

(54) **PROCEDE ET DISPOSITIF DE DEMODULATION AVEC COMPENSATION DU BRUIT DE PHASE**

VERFAHREN UND VORRICHTUNG FÜR DEMODULATION MIT PHASENRAUSCHKOMPENSATION

METHOD AND DEVICE FOR DEMODULATION WITH PHASE NOISE COMPENSATION

(84) Etats contractants désignés:
**DE FI FR GB IT NL**

(30) Priorité: **29.11.2001 FR 0115447**

(43) Date de publication de la demande:
**25.08.2004 Bulletin 2004/35**

(73) Titulaire: **Dibcom
91120 Palaiseau (FR)**

(72) Inventeurs:
• **PRAT, Charles-Henri**
  **F-75015 Paris (FR)**
• **LEVY, Yannick**
  **F-75012 Paris (FR)**
• **HAMMAN, Emmanuel**
  **F-75015 Paris (FR)**

(74) Mandataire: **Fréchède, Michel et al
Cabinet Lavoix
2 place d'Estienne d'Orves
75441 Paris Cedex 09 (FR)**

(56) Documents cités:
**EP-A- 0 901 259     EP-A- 0 933 903
EP-A- 1 175 056**

• **EL-TANANY M S ET AL: "Impact of phase noise on the performance of OFDM systems over frequency selective channels" VEHICULAR TECHNOLOGY CONFERENCE, 1997, IEEE 47TH PHOENIX, AZ, USA 4-7 MAY 1997, NEW YORK, NY, USA, IEEE, US, 4 mai 1997 (1997-05-04), pages 1802-1806, XP010229078 ISBN: 0-7803-3659-3**
• **STOTT J: "THE EFFECTS OF PHASE NOISE IN COFDM" EBU REVIEW- TECHNICAL, EUROPEAN BROADCASTING UNION. BRUSSELS, BE, no. 276, 21 juin 1998 (1998-06-21), pages 12-25, XP000785623 ISSN: 0251-0936**

## Description

La présente invention concerne un procédé de démodulation et un démodulateur d'un signal numérique du type comportant des symboles complexes comportant des informations transmises sur un pluralité de fréquences, une partie de ces informations étant connue.

Un tel démodulateur est mis en oeuvre par exemple pour la réception de signaux modulés en OFDM ou en COFDM, tels que des programmes de télévision ou des transferts de données numériques.

Selon la norme en vigueur, un signal de type OFDM ou COFDM (en anglais : Orthogonal Frequency Division Multiplexing ou Coded OFDM) correspond à une transmission par multiplexage par répartition orthogonale de la fréquence. Un tel signal est composé, par exemple, de 8192 signaux modulés en amplitude et en phase représentant chacun une information binaire. Chacun de ces signaux est transmis par une porteuse de fréquence différente. Ces signaux sont communément appelés « porteuses ».

Un ensemble de 8192 signaux multiplexés en fréquence, pendant une durée permettant d'émettre une période de la fréquence porteuse la plus faible constitue un symbole OFDM.

Par exemple, chaque porteuse est espacée des autres porteuses de 1 kHz, de sorte que l'émission d'un symbole complexe couvre l'ensemble de la bande passante de 8 MHz utilisable pour une émission de télévision.

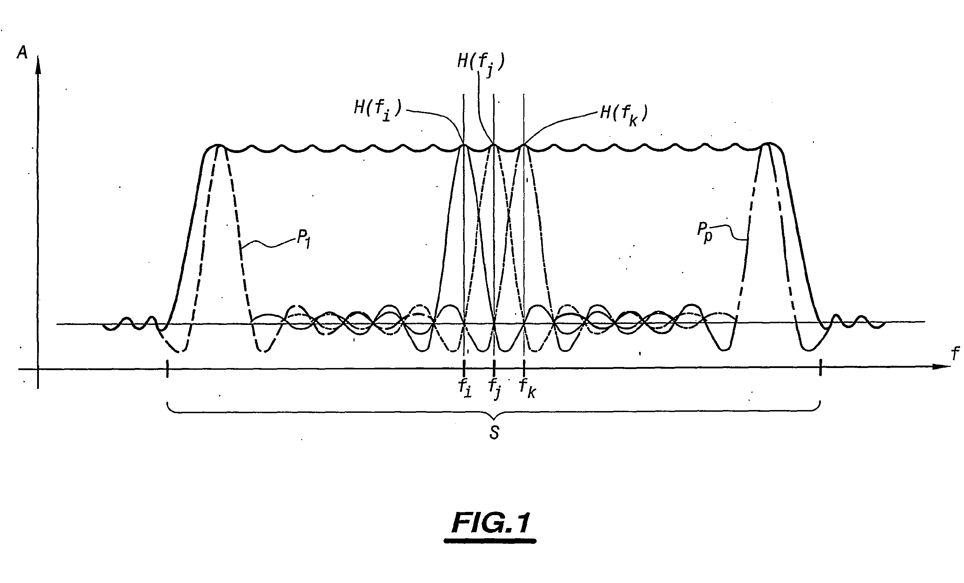

La figure 1 est une représentation fréquentielle d'un symbole S modulé en OFDM.

Ce symbole S est constitué de 8192 signaux $H(i)$ apparaissant sous la forme de sinus-cardinaux, chacun centré sur la fréquence $f_i$ de sa porteuse.

Certains des signaux $H(i)$ sont des signaux pilotes dont la fréquence et l'amplitude sont connues. Dans l'exemple, chaque symbole S comporte une pluralité P de signaux pilotes $P_1$ à $P_p$.

Chaque signal $H(i)$ est orthogonal aux autres, de sorte qu'un signal $H(i)$ atteint son maximum pour la fréquence $f_i$ alors que tous les autres signaux prennent une valeur nulle pour cette fréquence.

Ce principe d'orthogonalité de l'ensemble des signaux, permet d'effectuer une démodulation aisée et de reconstituer le signal binaire original.

De manière classique, la réception d'un signal de télévision est assurée par un dispositif d'accord ou syntoniseur communément appelé tuner.

Comme cela est indiqué dans l'article de J.H.SCOTT « The Effect Of Phase Noise in OFDM » paru dans la revue « EBU Technical Revue, Summer 1998 », les tuners introduisent deux types d'erreurs de phase à la réception.

La première est une erreur de phase commune qui introduit un décalage de phase sur l'ensemble des symboles S. La seconde erreur est un bruit de phase qui se traduit par une variation de la phase au sein d'un symbole et entraîne une perte d'orthogonalité des porteuses en influant différemment sur chacune d'entre elles.

L'adjonction d'un bruit de phase par le tuner à la réception, entraîne un élargissement du spectre de chaque fréquence, ce qui se traduit par un élargissement du pic principal des sinus-cardinaux et aboutit à une perte d'orthogonalité.

En effet, si le signal $H(i)$ est évasé, sa valeur n'est pas nulle lorsqu'un signal $H(j)$ suivant atteint son maximum pour la fréquence $f_j$.

De manière classique, on remédie à l'erreur de phase commune grâce à la présence dans les symboles, des signaux pilotes $P_1$ à $P_p$ dont l'atténuation et la modification permettent d'estimer la phase moyenne sur un symbole puis de la corriger.

On parle alors de correction de l'erreur de phase commune.

Le bruit de phase est limité uniquement par l'utilisation d'un tuner de bonne qualité afin d'introduire un bruit de phase aussi faible que possible. Dans le cadre de la réception d'un signal de type OFDM, l'utilisation d'un tuner classique entraîne un bruit de phase trop important et aboutit à l'impossibilité de démoduler le signal reçu.

Typiquement, un tuner dédié à la réception de signaux OFDM a une spécification de -105 dBc/Hz à 100 kHz et de - 90 dBc/Hz à 10 kHz.

Les tuners de type classique et notamment les tuners pour la réception de signaux de télévision par câble, n'ont une spécification que de - 75 dBc/Hz à 10 kHz.

Il apparaît donc que du fait du bruit de phase introduit par les tuners, il est nécessaire pour recevoir un signal de type OFDM, de disposer d'un tuner dédié performant et coûteux.

La demande de brevet européen EP 1 175 056, publiée le 23 janvier 2003, mais revendiquant une priorité du 21 juillet 2000, décrit un procédé de démodulation avec compensation du bruit à l'aide de signaux pilotes.

Le but de la présente invention est de remédier à ce problème et de permettre de proposer une chaîne de traitement d'un signal de type OFDM intégrant un tuner dont le coût est réduit.

L'invention a pour objet un procédé de démodulation suivant la revendication 1.

D'autres caractéristiques de l'invention sont énoncées dans les revendications dépendantes 2 à 5.

L'invention porte également sur un démodulateur de signaux numériques suivant la revendication 6.

D'autres caractéristiques du démodulateur sont énoncées dans les revendications 7 à 10.

L'invention porte également sur un programme de démodulateur de signaux OFDM ou COFDM, **caractérisé en ce qu'**il comprend des instructions de code de programme pour l'exécution des étapes du procédé selon l'invention, lorsque ledit programme est exécuté sur un démodulateur de signaux OFDM ou COFDM.

L'invention porte également sur un support amovible pour démodulateur de signaux OFDM ou COFDM selon la revendication 11 ou 12.

L'invention sera mieux comprise à la lecture de la description qui va suivre, donnée uniquement à titre d'exemple et faite en se référant aux dessins annexés, sur lesquels :

- la Fig.1 déjà évoquée, est une représentation fréquentielle d'un symbole d'une émission OFDM ;
- la Fig.2 est un schéma structurel d'un démodulateur selon l'invention ; et
- la Fig.3 est une représentation temporelle d'un symbole d'une émission OFDM pendant l'étape d'estimation du bruit de phase réalisée par le démodulateur de l'invention décrit en référence à la figure 2.

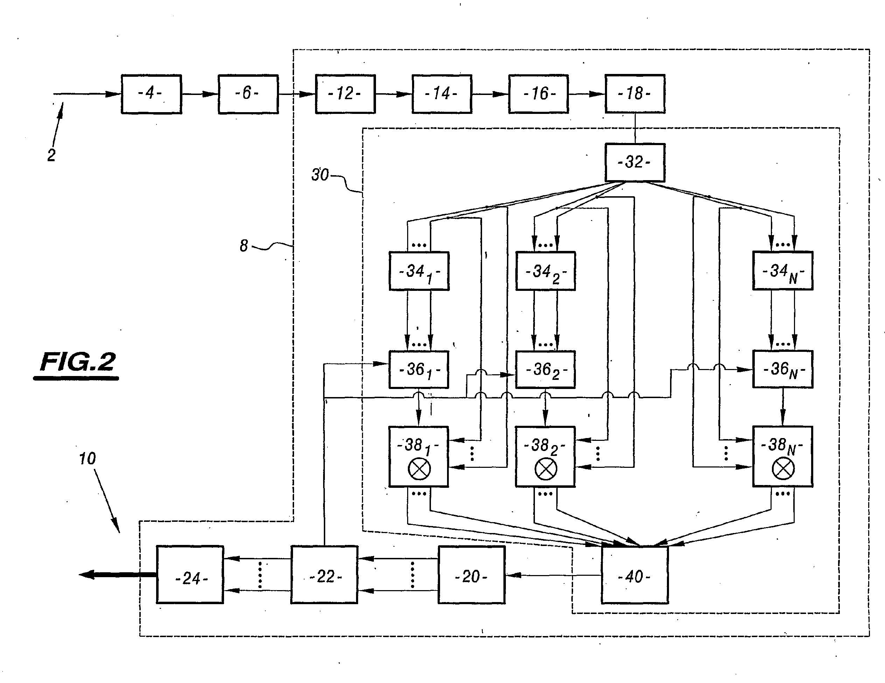

Sur la figure 2, est représentée schématiquement, une chaîne de réception intégrant un démodulateur selon l'invention. Les éléments de la chaîne de réception illustrés sur la figure 2 mettent en oeuvre les étapes du procédé selon l'invention, de sorte que les étapes du procédé se trouvent ainsi également illustrées sur cette figure.

Cette chaîne de réception reçoit à son entrée 2, un signal numérique comportant par exemple des programmes de télévision modulés en OFDM.

Ainsi que cela a été dit précédemment en référence à la figure 1, un signal OFDM est composé de plusieurs symboles S consécutifs.

Chaque symbole S est constitué d'une pluralité de sinus-cardinaux H(i), chacun centré sur une porteuse de fréquence $f_i$ différente décalée des porteuses avoisinantes de 1 kHz.

L'entrée 2 peut être reliée à tout équipement de réception d'un signal de télévision. Il s'agit par exemple d'une antenne hertzienne, mais cela peut également être une antenne parabolique ou encore une prise de connexion à un réseau câblé.

L'entrée 2 est suivie d'un tuner 4, puis d'un dispositif 6 d'amplification et de filtrage et enfin d'un démodulateur 8.

Selon l'invention, le tuner 4 peut être n'importe quel type de tuner. Par exemple, il s'agit d'un tuner classique dédié à la réception de signaux transmis sur un câble, relié à une antenne hertzienne.

Eventuellement, l'ensemble de ces éléments est intégré dans un décodeur de télévision ou directement dans un téléviseur.

Le démodulateur 8 délivre à sa sortie 10, une information binaire décodée exploitable par un dispositif de télévision numérique.

Le démodulateur 8 comporte en entrée un premier module 12 de conversion du signal analogique d'entrée en un signal numérique. Il est suivi par un module de filtrage 14 et par un module 16 de transposition de fréquence.

Avantageusement, le module de filtrage 14 comporte une boucle de contrôle automatique de gain.

Le module 16 de transposition de fréquence permet, par exemple, de décaler le signal d'entrée de sa fréquence initiale vers une fréquence en bande de base, plus propice aux opérations ultérieures à effectuer. Une telle opération est communément appelée « une transposition en bande de base ».

Le module 16 est suivi par un module 18 de synchronisation en fréquence et en temps qui permet notamment d'extraire du signal reçu les symboles S qui le constituent.

De manière classique, les modules 16 de transposition et 18 de synchronisation comportent des moyens d'estimation de la fréquence ou reçoivent une information d'estimation de fréquence d'autres modules.

Eventuellement les modules 4, 6, 12, 14 et 16 qui constituent le début de la chaîne de réception, peuvent être agencés dans un ordre différent.

Le démodulateur 8 comporte en outre, en aval du module de synchronisation 18, un module 20 de calcul principal, qui transforme classiquement un signal numérique temporel en un signal numérique fréquentiel en réalisant une Transformée de Fourier.

Le module 20 de calcul principal est suivi par un module 22 estimateur de canal, puis par un module 24 de décodage relié à la sortie 10 et délivrant un flux de signaux binaires.

Le module 22 effectue de manière classique une estimation de la phase de chaque symbole. Arbitrairement, on considère que le signal reçu devrait avoir une phase nulle. De fait, à partir de la phase estimée par le module 22, on extrait une fonction de transfert en phase de canal traduisant l'argument de la fonction de transfert du canal pour chaque fréquence.

Selon l'invention, le démodulateur 8 comporte un module 30 d'estimation et de compensation du bruit de phase disposé entre le module de synchronisation 18 et le module 20 de calcul principal.

Ce module 30 comporte un module de segmentation temporelle 32 recevant en entrée les symboles S extraits par le module de synchronisation 18. Les sorties du module de segmentation 32 sont reliées une pluralité de modules $34_1$ à $34_N$ de calcul élémentaire pour leur fournir à chacun un segment du signal reçu par le module 30.

Chaque module $34_1$ à $34_N$ de calcul élémentaire est adapté pour transformer un signal numérique exprimé dans une base de temps en un signal numérique exprimé dans une base fréquentielle. Pour ce faire, chaque module de calcul élémentaire est propre à calculer la Transformée de Fourier Directe du signal d'entrée.

Cette transformation est réalisée à l'aide d'une Transformée de Fourier Directe (DFT) qui est faite selon la formule suivante :

$$Y_{f,k} = \int_{k-1\frac{Tu}{N}}^{k\frac{Tu}{N}} x(t)e^{-j2\pi ft}\, dt$$

dans laquelle k est l'indice du segment en cours, $T_u/N$ est la durée d'un segment et f est la fréquence.

Chacun de ces modules $34_1$ à $34_N$ de calcul élémentaire est relié en sortie à un module $36_1$ à $36_N$ d'estimation de phase par segment. Les modules $36_1$ à $36_N$ d'estimation de phase par segment sont également reliés au module 22 d'estimation de canal.

Chaque module $36_1$ à $36_N$ d'estimation de phase par segment est enfin relié à un mélangeur $38_1$ à $38_N$ lesquels reçoivent également en entrée, les segments délivrées par le module de segmentation 32.

Les informations délivrées par les mélangeurs $38_1$ à $38_N$ sont ensuite adressées à un module de démultiplexage 40, puis au module de calcul 20.

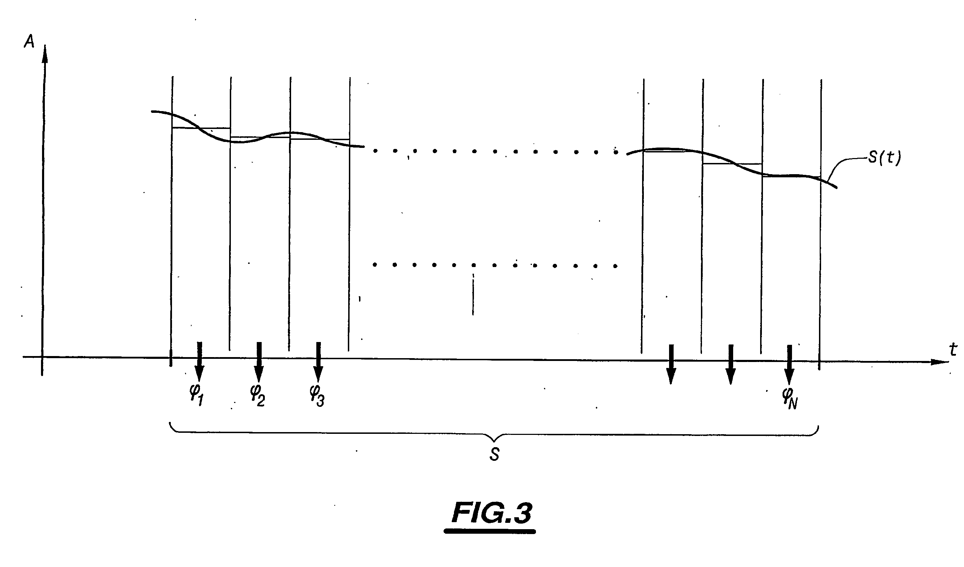

En référence aux figures 2 et 3, le fonctionnement du module 30 d'estimation et de compensation du bruit de phase va maintenant être explicité.

Le module de synchronisation 18 délivre une information numérique représentative des symboles S sur une base temporelle. Dans cette information, tous les signaux sont multiplexés de sorte que toutes les porteuses sont présentes.

La courbe S(t) représentée sur la figure 3, est une représentation temporelle schématique d'un tel symbole.

Le module de segmentation 32 reçoit les symboles S et effectue sur chaque symbole une segmentation en N segments.

Par exemple, cette segmentation est faite en 32 segments temporels consécutifs de 256 points chacun.

Ainsi que cela a été dit précédemment, chaque symbole S comporte un certain nombre de signaux pilotes $P_1$ à $P_p$ dont la fréquence et l'amplitude sont connues. Typiquement, un signal sur quatre est un signal pilote.

Chacun des N segments temporels comporte une partie de chacun des signaux constituant le symbole S. Ainsi, toutes les porteuses et notamment toutes les porteuses des signaux pilotes $P_1$ à $P_p$, sont représentées dans chacun des segments.

Chacun des N segments subit, dans un module $34_1$ à $34_N$ de calcul élémentaire correspondant, une transformation afin de passer d'une base temporelle vers une base fréquentielle ainsi que cela a été décrit précédemment.

Les modules $34_1$ à $34_N$ de calcul élémentaire délivrent donc des informations numériques représentatives de la répartition fréquentielle des informations dans chaque segment du symbole S considéré.

Les modules $36_1$ à $36_N$ d'estimation de phase par segment reçoivent les informations délivrées par les modules $34_1$, à $34_N$ ainsi que la fonction de transfert en phase du canal délivrée par le module 22.

Pour chaque symbole S, les modules $36_1$ à $36_N$ effectuent alors une estimation de la phase, segment par segment, en utilisant les signaux pilotes $P_1$ à $P_p$ ainsi que la fonction de transfert en phase du canal.

Sur un même segment, on considère que la phase est constante. Ainsi, chaque module $36_1$ à $36_N$ d'estimation, effectue une moyenne de la phase sur tous les signaux pilotes $P_1$ à $P_p$ d'un segment.

L'estimation de la phase par segment, ou phase estimée par segment, s'exprime alors de la manière suivante :

$$\varphi_k = \arg\left( \sum_{f_n} \frac{Y_{k,f_n}}{A_{f_n}} \right)$$

Dans cette formule, $f_n$ représente la fréquence de chacun des signaux pilotes à l'intérieur d'un segment et k est l'indice du segment en cours.

$Y_{k,fn}$ représente la valeur de la porteuse du signal pilote reçue et $A_{fn}$ la valeur de la fonction de transfert en phase du canal pour la fréquence $f_n$. La fonction de transfert utilisée est déterminée pour le symbole précédent par le module 22.

Dans l'exemple représenté, les modules $36_1$ à $36_N$ d'estimation de phase par segment utilisent la fonction de transfert en phase du canal du symbole précédent le symbole en cours de traitement.

En effet, la fonction de transfert en phase du canal est liée au canal de transmission et il est possible de considérer qu'elle ne varie pas d'un symbole sur l'autre.

En variante, le module 30 de compensation du bruit de phase comporte une mémoire tampon afin de temporiser la chaîne de traitement et d'utiliser dans les modules $36_1$ à $36_N$, la fonction de transfert en phase du canal correspondant au symbole en cours de traitement et non au symbole précédent.

Les modules $36_1$ à $36_N$ d'estimation de phase délivrent donc aux mélangeurs $38_1$ à $38_n$, une phase estimée par segment $\varphi_1$ à $\varphi_N$ correspondant à une phase moyenne sur chaque segment prenant en compte la fonction de transfert en phase du canal. Les variations entre ces phases estimées par segment correspondent au bruit de phase introduit par le tuner 4. En compensant cette phase estimée sur chacun des segments, les moyens 30 réalisent donc une compensation du bruit de phase.

Chaque mélangeur $38_1$ à $38_N$ reçoit en entrée, les segments émis par le module de segmentation 32 correspondant à la représentation temporelle d'un segment du symbole S et la phase estimée par segment $\varphi_1$ à $\varphi_n$. Ils effectuent alors une compensation de phase sur le segment temporel provenant du module de segmentation 32. Cette compensation s'effectue de manière classique par rotation de la phase.

Chaque mélangeur $38_1$ à $38_N$ délivre ainsi un signal temporel correspondant à un segment du signal initial dans lequel la phase estimée par segment et prenant en compte la fonction de transfert en phase du canal, a été compensée.

Les résultats de l'ensemble des mélangeurs $38_1$ à $38_N$ sont adressés au module de démultiplexage 40 afin de reconstituer un symbole temporel S' dans lequel le bruit de phase a été compensé segment par segment.

Ce symbole est ensuite adressé au module 20 de calcul qui effectue de manière classique, une transposition de la base temporelle vers une base fréquentielle selon une transformée de Fourier afin de pouvoir procéder à l'estimation et la détermination de la fonction de transfert en phase du canal dans le module 22 puis au décodage des informations dans le module 24.

Il apparaît donc qu'un démodulateur selon l'invention permet de compenser le bruit de phase introduit par le tuner.

Le procédé a été décrit en référence à un signal OFDM, mais il s'applique également aux signaux COFDM ou encore à tout autre signal présentant un multiplexage en fréquences et comportant des signaux pilotes de référence.

Ce démodulateur peut se présenter sous la forme d'un dispositif dédié à cette fonction ou être intégré dans un décodeur ou encore directement dans un téléviseur.

Par ailleurs, un programme propre à la mise en oeuvre de ce procédé peut être stocké dans une mémoire non volatile.

Par exemple, cette mémoire est intégrée dans une carte à puce destinée à être insérée dans un décodeur adapté pour l'exécution de ce programme.

En outre, le procédé peut être mis en oeuvre grâce à un composant programmable tel que par exemple un composant FPGA dont les connexions sont spécialement modifiées pour son exécution. Pour son fonctionnement, ce composant après programmation est mis en oeuvre dans un démodulateur de signaux.

## Revendications

1. Procédé de démodulation d'un signal numérique comportant des symboles complexes temporels (S), lesquels comportent des informations transmises sur une pluralité de fréquences ($f_i$, $f_j$, $f_k$), une partie de ces informations étant des informations connues de référence ($P_1$ à $P_p$), ledit procédé comportant au moins une étape de transformation principale dudit signal d'une base temporelle vers une base fréquentielle, **caractérisé en ce qu'**il comporte en outre, avant ladite étape de transformation principale, une étape d'estimation et de compensation du bruit de phase ($\varphi_1$ à $\varphi_N$) sur chaque symbole qui comprend les étapes suivantes :

   - une étape de segmentation de chaque symbole temporel (S) en une pluralité (N) de segments temporels consécutifs, chacun des segments temporels comportant, dans sa représentation fréquentielle, les informations transmises sur la pluralité de fréquences, notamment les informations connues de référence ($P_1$ à $P_p$);
   - une étape de transformation élémentaire de chacun desdits segments d'une base temporelle vers une base fréquentielle ;
   - une étape d'estimation de la phase moyenne par segment ($\varphi_1$ à $\varphi_N$) délivrant une estimation de phase pour chacun desdits segments à l'aide desdites informations de référence ($P_1$ à $P_p$) ; et
   - une étape de compensation de la phase ($\varphi_1$ à $\varphi_N$) sur chaque segment, issu de ladite étape de segmentation.

2. Procédé selon la revendication 1, **caractérisé en ce que** ladite étape de transformation élémentaire de chaque segment, comprend l'application audit segment d'une Transformée de Fourier Directe.

3. Procédé selon la revendication 2, **caractérisé en ce qu'**il comporte une étape d'estimation de la fonction de transfert en phase du canal, et **en ce que** ladite étape d'estimation de la phase par segment ($\varphi_1$ à $\varphi_N$) délivre une phase estimée par segment prenant en compte ladite fonction de transfert en phase du canal.

4. Procédé selon l'une quelconque des revendications 1 à 3, **caractérisé en ce que** ledit signal est un signal modulé en OFDM.

5. Procédé selon l'une quelconque des revendications 1 à 3, **caractérisé en ce que** ledit signal est un signal modulé en COFDM.

6. Démodulateur (8) de signaux numériques comportant des symboles complexes temporels (S), lesquels comportent des informations sur une pluralité de fréquences ($f_i$, $f_j$, $f_k$), une partie de ces informations étant des informations connues de référence ($P_1$ à $P_p$), ledit démodulateur (8) comportant au moins des moyens (20) de transformation principale dudit signal d'une base temporelle vers une base fréquentielle, **caractérisé en ce qu'**il comporte en outre, en entrée desdits moyens (20) de transformation principale, des moyens (30) d'estimation et de compensation du bruit de phase sur chaque symbole qui comprennent :

   - des moyens de segmentation (32) recevant en entrée lesdits symboles temporels (S) et adaptés pour les segmenter en une pluralité (N) de segments temporels consécutifs, chacun des segments temporels comportant, dans sa représentation fréquentielle, les informations transmises sur la pluralité de fréquences, notamment les informations connues de référence ($P_1$ à $P_p$) ;

- des moyens ($34_1$ à $34_N$) de transformation élémentaire reliés à la sortie desdits moyens de segmentation (32) et adaptés pour transposer chacun desdits segments d'une base temporelle vers une base fréquentielle ;

- des moyens ($36_1$ à $36_N$) d'estimation de la phase moyenne par segment reliés à la sortie desdits moyens ($34_1$ à $34_N$) de transformation mathématique et adaptés pour estimer la phase ($\varphi_1$ à $\varphi_N$) dans chacun desdits segments à l'aide desdites informations de référence ($P_1$ à $P_p$) ; et

- des moyens ($38_1$ à $38_N$) de compensation de phase ($\varphi_1$ à $\varphi_N$) reliés à la sortie desdits moyens ($36_1$ à $36_N$) d'estimation de phase par segment et reliés auxdits moyens de segmentation (32) afin de compenser la phase sur chaque segment délivrée par lesdits moyens de segmentation (32).

7. Démodulateur selon la revendication 6, **caractérisé en ce que** lesdits moyens ($34_1$ à $34_N$) de transformation élémentaire sur chaque segment comprennent des moyens d'application audit segment d'une Transformée de Fourier Directe.

8. Démodulateur selon l'une quelconque des revendications 6 ou 7, **caractérisé en ce que** ledit démodulateur (8) comporte en outre des moyens (22) d'estimation de la fonction de transfert en phase du canal reliés auxdits moyens ($36_1$ à $36_N$) d'estimation de phase par segment, lesquels sont adaptés pour délivrer une phase estimée par segment ($\varphi_1$ à $\varphi_N$) prenant en compte ladite fonction de transfert en phase du canal.

9. Démodulateur selon l'une quelconque des revendications 6 à 8, **caractérisé en ce que** ledit signal est un signal modulé en OFDM.

10. Démodulateur selon l'une quelconque des revendications 6 à 8, **caractérisé en ce que** ledit signal est un signal modulé en COFDM.

11. Programme de démodulateur de signaux OFDM ou COFDM, **caractérisé en ce qu'**il comprend des instructions de code de programme pour l'exécution des étapes du procédé selon l'une quelconque des revendications 1 à 5, lorsque ledit programme est exécuté sur un démodulateur de signaux OFDM ou COFDM.

12. Programme selon la revendication 11, **caractérisé en ce qu'**il est enregistré sur un élément de mémoire non volatile d'un démodulateur de signaux OFDM ou COFDM.

**Claims**

1. Method for demodulating a digital signal comprising complex time symbols (S) which themselves comprise data sent over a plurality of frequencies ($f_i$, $f_j$, $f_k$), some of these data being known reference data ($P_1$ to $P_p$), the said method comprising at least one main step of transforming said signal from a time base to a frequency base, **characterised in that** it further comprises, before said main transformation step, a step of estimating and compensating the phase noise ($\phi_1$ to $\phi_N$) on each symbol which comprises the following steps:

   - a step of segmenting each time symbol (S) into a plurality (N) of consecutive time segments, each of the time segments comprising, in its frequency representation, the data sent over the plurality of frequencies, notably the known reference data ($P_1$ to $P_p$);
   - a step of elementary transformation of each of said segments from a time base to a frequency base;
   - a step of estimating the mean phase per segment ($\phi_1$ to $\phi_N$) delivering a phase estimation for each of the said segments by means of said reference data ($P_1$ to $P_p$); and
   - a step of phase compensation ($\phi_1$ to $\phi_N$) on each segment, obtained from said segmentation step.

2. Method according to claim 1, **characterised in that** the said step of elementary transformation of each segment comprises applying a Direct Fourier Transform to the said segment.

3. Method according to claim 2, **characterised in that** it comprises a step of estimating the phase transfer function of the channel, and **in that** the said step of estimating the phase per segment ($\phi_1$ to $\phi_N$) delivers an estimated phase per segment taking account of said phase transfer function of the channel.

4. Method according to any one of claims 1 to 3, **characterised in that** the said signal is an OFDM modulated signal.

5. Method according to any one of claims 1 to 3, **characterised in that** the said signal is a COFDM modulated signal.

6. Demodulator (8) for digital signals comprising complex time symbols (S) which comprise data sent over a plurality of frequencies ($f_i$, $f_j$, $f_k$), some of these data being known reference data ($P_1$ to $P_p$), the said demodulator comprising at least main transformation means (20) for transforming said signal from a time base to a frequency base, **characterised in that** it further comprises, at the input of said main transformation means (20), means (30) for estimating and compensating the phase noise on each symbol, which comprise:

- segmentation means (32) receiving the said time symbols (S) at their input and adapted to segment them into a plurality (N) of consecutive time segments, each of the time segments comprising, in its frequency representation, the data sent over the plurality of frequencies, notably the known reference data ($P_1$ to $P_p$);
- elementary transformation means ($34_1$ to $34_N$) connected to the output of said segmentation means (32) and adapted to transpose each of said segments from a time base to a frequency base;
- means ($36_1$ to $36_N$) for estimating the mean phase per segment connected to the output of said mathematical transformation means ($34_1$ to $34_N$) and adapted to estimate the phase ($\phi_1$ to $\phi_N$) in each of the said segments using said reference data ($P_1$ to $P_p$); and
- means ($38_1$ to $38_N$) for phase compensation ($\phi_1$ to $\phi_N$) connected to the output of the said means ($36_1$ to $36_N$) for estimating the phase per segment and connected to the said segmentation means (32) in order to compensate the phase on each segment, delivered by the said segmentation means (32).

**7.** Demodulator according to claim 6, **characterised in that** the said elementary transformation means ($34_1$ to $34_N$) on each segment comprise means for applying a Direct Fourier Transform to the said segment.

**8.** Demodulator according to any one of claims 6 or 7, **characterised in that** the said demodulator (8) further comprises means (22) for estimating the phase transfer function of the channel which are connected to said means ($36_1$ to $36_N$) for estimating the phase per segment, which are adapted to deliver an estimated phase per segment ($\phi_1$ to $\phi_N$) taking into account said phase transfer function of the channel.

**9.** Demodulator according to any one of claims 6 to 8, **characterised in that** the said signal is an OFDM-modulated signal.

**10.** Demodulator according to any one of claims 6 to 8, **characterised in that** the said signal is a COFDM-modulated signal.

**11.** OFDM or COFDM signal demodulator programme, **characterised in that** it comprises programme code instructions for executing the steps of the method according to any one of claims 1 to 5, when the said programme is run on an OFDM or COFDM signal demodulator.

**12.** Programme according to claim 11, **characterised in that** it is recorded on a non-volatile memory element of an OFDM or COFDM signal demodulator.

**Patentansprüche**

**1.** Verfahren zum Demodulieren eines digitalen Signals, das komplexe Zeitsymbole (S) aufweist, die auf einer Mehrzahl von Frequenzen ($f_i$, $f_j$, $f_k$) übertragene Informationen aufweisen, wobei ein Teil der Informationen bekannte Referenzinformationen ($P_1$ bis $P_p$) sind, wobei das Verfahren mindestens einen Schritt des Haupttransformierens des Signals von einer Zeitbasis auf eine Frequenzbasis aufweist, **dadurch gekennzeichnet, dass** es ferner vor dem Haupttransformationsschritt einen Schritt des Schätzens und Kompensierens des Phasenrauschens ($\varphi_1$ bis $\varphi_N$) auf jedem Symbol aufweist, der die folgenden Schritte aufweist:

- einen Schritt des Segmentierens jedes Zeitsymbols (S) in eine Mehrzahl (N) von aufeinanderfolgenden Zeitsegmenten, wobei jedes der Zeitsegmente in seiner Frequenzdarstellung die auf der Mehrzahl von Frequenzen übertragenen Informationen, insbesondere die bekannten Referenzinformationen ($P_1$ bis $P_p$) aufweist,
- einen Schritt des Elementar-Transformierens jedes der Segmente von einer Zeitbasis auf eine Frequenzbasis,
- einen Schritt des Schätzens der durchschnittlichen Phase pro Segment ($\varphi_1$ bis $\varphi_N$), der mit Hilfe der Referenzinformationen ($P_1$ bis $P_p$) eine Phasenschätzung für jedes der Segmente ausgibt, und
- einen Schritt des Kompensierens der Phase ($\varphi_1$ bis $\varphi_N$) auf jedem Segment, das aus dem Schritt des Segmentierens stammt.

**2.** Verfahren gemäß Anspruch 1, **dadurch gekennzeichnet, dass** der Schritt des Elementar-Transformierens jedes Segmentes das Anwenden einer direkten Fourier-Transformation auf das Segment aufweist.

**3.** Verfahren gemäß Anspruch 2, **dadurch gekennzeichnet, dass** es einen Schritt des Schätzens der Kanalphasen-Übertragungsfunktion aufweist, und dass der Schritt des Schätzens der Phase pro Segment ($\varphi_1$ bis $\varphi_N$) eine geschätzte Phase pro Segment unter Berücksichtigung der Kanalphasen-Übertragungsfunktion ausgibt.

**4.** Verfahren gemäß einem der Ansprüche 1 bis 3, **da-**

**durch gekennzeichnet, dass** das Signal ein OFDMmoduliertes Signal (OFDM, engl. Orthogonal Frequency Division Multiplexing [Orthogonal-Frequenzteilungs-Multiplex]) ist.

5. Verfahren gemäß einem der Ansprüche 1 bis 3, **dadurch gekennzeichnet, dass** das Signal ein COFDMmoduliertes Signal (COFDM, engl. Coded Orthogonal Frequency Division Multiplexing [Kodierungs-Orthogonal-Frequenzteilungs-Multiplex]) ist.

6. Demodulator (8) für digitale Signale, die komplexe Zeitsymbole (S) aufweisen, die Informationen über eine Mehrzahl von Frequenzen ($f_i$, $f_j$, $f_k$) aufweisen, wobei ein Teil der Informationen bekannte Referenzinformationen ($P_1$ bis $P_p$) sind, wobei der Demodulator (8) mindestens Mittel (20) zum Haupttransformieren des Signals von einer Zeitbasis auf eine Frequenzbasis aufweist, **dadurch gekennzeichnet, dass** er ferner am Eingang der Haupttransformationsmittel (20) Mittel (30) zum Schätzen und Kompensieren des Phasenrauschens auf jedem Symbol aufweist, die aufweisen:

- Segmentierungsmittel (32), die am Eingang die Zeitsymbole (S) empfangen und zum Segmentieren derselben in eine Mehrzahl (N) von aufeinanderfolgenden Zeitsegmenten eingerichtet sind, wobei jedes der Zeitsegmente in seiner Frequenzdarstellung die auf der Mehrzahl von Frequenzen übertragenen Informationen, insbesondere die bekannten Referenzinformationen ($P_1$ bis $P_p$) aufweist,
- Elementar-Transformations-Mittel ($34_1$ bis $34_N$), die mit dem Ausgang der Segmentierungsmittel (32) verbunden sind und zum Transponieren jedes der Segmente von einer Zeitbasis auf eine Frequenzbasis eingerichtet sind,
- Mittel ($36_1$ bis $36_N$) zum Schätzen der durchschnittlichen Phase pro Segment, die mit dem Ausgang der Mittel ($34_1$ bis $34_N$) für die mathematische Transformation verbunden sind und zum Schätzen der Phase ($\varphi_1$ bis $\varphi_N$) in jedem der Segmente mit Hilfe der Referenzinformationen ($P_1$ bis $P_p$) eingerichtet sind, und
- Mittel ($38_1$ bis $38_N$) zum Kompensieren einer Phase ($\varphi_1$ bis $\varphi_N$), die mit dem Ausgang der Mittel ($36_1$ bis $36_N$) zum Schätzen einer Phase pro Segment verbunden sind und mit den Segmentierungsmitteln (32) verbunden sind, zum Kompensieren der Phase auf jedem Segment, das von den Segmentierungsmitteln (32) bereitgestellt wird.

7. Demodulator gemäß Anspruch 6, **dadurch gekennzeichnet, dass** die Mittel ($34_1$ bis $34_N$) zum Elementar-Transformieren auf jedem Segment Mittel zum Anwenden einer direkten Fourier-Transformation auf das Segment aufweisen.

8. Demodulator gemäß einem der Ansprüche 6 oder 7, **dadurch gekennzeichnet, dass** der Demodulator (8) ferner Mittel (22) zum Schätzen der Kanalphasen-Übertragungsfunktion aufweist, die mit den Mitteln ($36_1$ bis $36_N$) zum Schätzen einer Phase pro Segment verbunden sind, die zum Ausgeben einer geschätzten Phase pro Segment ($\varphi_1$ bis $\varphi_N$) unter Berücksichtigung der Kanalphasen-Übertragungsfunktion eingerichtet sind.

9. Demodulator gemäß einem der Ansprüche 6 bis 8, **dadurch gekennzeichnet, dass** das Signal ein OFDMmoduliertes Signal ist.

10. Demodulator gemäß einem der Ansprüche 6 bis 8, **dadurch gekennzeichnet, dass** das Signal ein COFDMmoduliertes Signal ist.

11. Demodulator-Programm für OFDM- oder COFDM-Signale, **dadurch gekennzeichnet, dass** es Programm-Code-Befehle für das Ausführen der Schritte des Verfahrens gemäß einem der Ansprüche 1 bis 5 aufweist, wenn das Programm auf einem OFDM- oder COFDM-Signal-Demodulator ausgeführt wird.

12. Programm gemäß Anspruch 11, **dadurch gekennzeichnet, dass** es auf einem nichtflüchtiger-Speicher-Element eines OFDM- oder COFDM-Signal-Demodulators gespeichert ist.

*FIG.1*

**FIG.2**

$$\underline{FIG.3}$$

EP 1 449 339 B1

**RÉFÉRENCES CITÉES DANS LA DESCRIPTION**

**Documents brevets cités dans la description**

- EP 1175056 A

**Littérature non-brevet citée dans la description**

- **J.H.SCOTT.** The Effect Of Phase Noise in OFDM. *EBU Technical Revue,* 1998